# EUROPÄISCHE PATENTSCHRIFT

(11) **EP 3 055 143 B1**
(45) Veröffentlichungstag und Bekanntmachung des Hinweises auf die Patenterteilung: **09.10.2019**
(21) Anmeldenummer: 14749751.5
(22) Anmeldetag: 31.07.2014
(51) Int. Cl.: B60C 11/12, B60C 11/13

(54) **FAHRZEUGLUFTREIFEN**
VEHICLE TIRE
PNEUMATIQUE POUR VEHICULE

(30) Priorität: 10.10.2013 DE 102013111196
(43) Veröffentlichungstag der Anmeldung: 17.08.2016
(73) Patentinhaber: Continental Reifen Deutschland GmbH, 30165 Hannover (DE)
(72) Erfinder: BOGENSCHÜTZ, Peter, 30900 Wedemark (DE)
(74) Vertreter: Finger, Karsten
(86) Internationale Anmeldenummer: PCT/EP2014/066447
(87) Internationale Veröffentlichungsnummer: WO 2015/051933

(56) Entgegenhaltungen:
- EP-A1- 2 450 201
- EP-A2- 0 664 230
- DE-A1-102007 060 559
- FR-A1- 2 921 586
- JP-A- S63 297 107

## Beschreibung

Die Erfindung betrifft ein Laufstreifenprofil eines Fahrzeugreifens mit radial erhabenen und durch Rillen begrenzten Profilpositiven - wie Profilblockelementen oder Profilrippen - , welche in radialer Richtung R des Reifens durch eine radial äußere Oberfläche begrenzt sind, und mit in Profilpositiven voneinander beabstandet ausgebildeten Feineinschnitten.

Derartige Fahrzeugluftreifen sind bekannt. Dabei ist es bekannt, zur Erzielung eines besseren Griffes auf Schnee in den Profilblöcken von Profilblockreihen oder in Profilrippen im Wesentlichen parallel erstreckte Feineinschnitte auszubilden. Beim Abrollen bilden die Feineinschnitte zusätzliche Griffkanten. Darüber hinaus kann sich Schnee in die sich öffnenden Feineinschnitten einpressen und hierdurch den Schneegriff weiter verbessern. Dabei ist es bekannt, die Feineinschnitte geradlinig oder wellenförmig auszubilden.

Zur Erzielung einer optimalen Griffwirkung zum Griff auf Schnee ist es dabei wünschenswert, die Feineinschnitte derart im Profilelement zu positionieren, dass eine möglichst hohe Dichte an Feineinschnitten erzielt wird. Dabei müssen die Abstände der Feineinschnitte jedoch soweit auseinander positioniert werden, dass je nach Erfordernis noch ausreichend hohe Steifigkeit (Biegesteifigkeit) des mit den Feineinschnitten ausgestalteten Profilpositivs sichergestellt werden kann, um die jeweils gewünschte erforderliche Kraftübertragung für Trockenbremsen und Traktionseigenschaften sicherstellen zu können.

Beim Einformen von Reifenprofilen in der Vulkanisationsform bildet sich zwischen der das Negativ des auszuformenden Laufstreifenprofils bildenden Reifenform und dem hierdurch ausgeformten Kautschukmaterial Lufteinschlüsse, die die Ausformung negativ beeinflussen. Um die unvollständige Ausformung und somit des fertigen Laufstreifenprofils zu vermeiden, ist es bekannt, in der Reifenform eine Vielzahl von Entlüftungsventilen auszubilden, die mit einem tellerförmigen Ventilteller von ca. 3mm Durchmesser ausgebildet sind. Die Ventilgröße ist so dimensioniert, dass eine Entlüftung sicher möglich ist und das Austreten von Kautschukmaterial durch das sich selbst schließende Ventil weitgehend vermieden werden kann. Bei Laufstreifenprofilen mit Feineinschnitten ist es dabei wünschenswert, dass die Ventile auch innerhalb der netzartigen Anordnung der Feineinschnitte verteilt ausgebildet sind, um Lufteinschlüsse zwischen den die Feineinschnitte bildenden Lamellenblechen, der Reifenform und dem Kautschukmaterial zu verhindern. Daher ist es üblich, die Abstände zwischen den nebeneinander angeordneten Feineinschnitte jeweils so groß zu wählen, dass die Entlüftungsventile zwischen den Feineinschnitten mit ausreichend Abstand zu den Feineinschnitten positioniert werden können. Somit werden die Abstände der Feineinschnitte zueinander sowie die Position der Feineinschnitte im Profilelement und die Dichte der Anordnung von Feineinschnitten eines Profilelementes durch die Erfordernisse der Entlüftung zusätzlich beschränkt.

Bei Berücksichtigung der Erfordernisse der Entlüftung durch die Entlüftungsventile werden somit bei den herkömmlichen Ausbildungen die Abstände der Feineinschnitte schon aufgrund der Vorgaben der Entlüftung so groß positioniert, dass die Auslegungsmöglichkeiten für einen optimalen Schneegriff und somit weitere Schneegriffsoptimierungen hierdurch zusätzlich beschränkt werden. Die für den Schneegriff gewünschte hohe Dichte von Feineinschnitten im Profilelement wird somit bereits durch die Erfordernisse der Entlüftung stark eingeschränkt.

Es ist auch bekannt, Entlüftungsventile lediglich außerhalb des Erstreckungsbereichs der Feineinschnitte auszubilden. Um bei derartigen Ausbildungen eine ausreichende Entlüftung sicherzustellen, müssen die Feineinschnitte soweit voneinander beabstandet positioniert werden, dass eine sichere Ableitung der Luft zwischen den Feineinschnitten während des Einformens gewährleistet werden kann. Dies bedeutet, dass auch bei dieser Ausbildung große Abstände zwischen den Feineinschnitten aufgrund der erforderlichen Entlüftung vorgegeben sind. Bei längeren Feineinschnitten mit größerer Erstreckung der Einschnittslänge besteht dennoch die Gefahr, dass eine ausreichende Entlüftung nicht gegeben ist.

Eine Ausbildung von Entlüftungsventilen mit kleineren Ventiltellern könnte zwar im beschränkten Umfang die Ausbildung einer höheren Dichte von Feineinschnitten im Profilelement ermöglichen. Allerdings neigen Ventile mit kleinerem Ventiltellerdurchmesser zu zunehmend höherer Verstopfungsanfälligkeit, so dass der Einsatz sehr aufwendig in der Handhabung ist mit einem hohen Aufwand für Reinigung und Wartung und mit zunehmender Behinderung einer automatisierten Produktion.

Aus der EP 0664230 A2 ist ein Laufstreifenprofil eines Fahrzeugluftreifens gemäß den Merkmalen des Oberbegriffs des Anspruchs 1 bekannt. Aus dem Dokument ist es bekannt, Feineinschnitte in Form von geschlossenen Kreislinien auszubilden, welche Gummimaterial des Profilpositivs vollständig umschließen. Dem Dokument ist auch zu entnehmen, derartige geschlossene kreisförmig ausgebildete Feineinschnitte mit geradlinig erstreckten Feineinschnitt-Abschnitten zu verbinden.

Der Erfindung liegt die Aufgabe zugrunde, derartige Laufstreifenprofile mit Feineinschnitten zu schaffen, bei denen optimale Entlüftungsmöglichkeit bei der Ausformung unter Nutzung erweiterter Auslegungsoptionen für optimalen Schneegriff ermöglicht werden.

Die Aufgabe wird erfindungsgemäß durch die Ausbildung eines Laufstreifenprofils eines Fahrzeugreifens mit radial erhabenen und durch Rillen begrenzten Profilpositiven - wie Profilblockelementen oder Profilrippen -, welche in radialer Richtung R des Reifens durch eine radial äußere Oberfläche begrenzt sind, und mit in Profilpositiven voneinander beabstandet ausgebildeten Feineinschnitten, gemäß den Merkmalen von Anspruch 1 gelöst, bei dem im Profilpositiv Feineinschnitte ausgebildet sind, die längs ihrer Haupterstreckungsrichtung in der radial äußeren Oberfläche aus hintereinander angeordneten - insbesondere in Haupterstreckungsrichtung ausgerichteten - ersten geradlinigen und zweiten kreissegmentlinienförmigen Abschnitten ausgebildet sind, und bei dem zumindest diejenigen ersten geradlinigen Abschnitte eines Feineinschnitts, welche jeweils zwei zweite kreissegmentlinienförmige Abschnitte miteinander verbinden, parallel zueinander ausgebildet sind, wobei der zweite, kreissegmentlinienförmige Abschnitt zumindest jeweils mit einem Kreisradius R_{K} ausgebildet ist, wobei innerhalb des Kreises zumindest einiger kreissegmentlinienförmiger Abschnitte jeweils eine Erhebung des Gummimaterials ausgebildet ist und wobei diese Erhebung kreisförmig, ringförmig, kreissegmentförmig oder ringsegmentförmig mit einem Außenradius Rz der Kreisform oder Ringform ausgebildet ist mit R_{K} ≥ (Rz +0,5mm).

Durch diese Ausbildung wird es ermöglicht, dass bereits in der Ausgestaltung der Feineinschnitte innerhalb des Erstreckungsabschnitts des Feineinschnittes selbst durch die kreissegementlinienförmigen Abschnitte geeignete Flächen vorgegeben sind zum Einsatz von Entlüftungsventilen in der Reifenform. Die Entlüftungsventile können somit in der Position des Kreises der halbkreislinienförmigen Abschnitte positioniert werden und somit auch im Erstreckungsbereich des einzelnen Feineinschnittes selbst zur Entlüftung eingesetzt werden. Hierdurch können benachbarte Feineinschnitte mit engerem Abstand zueinander positioniert und dabei dennoch eine ausreichende Entlüftung innerhalb des Netzes von Feineinschnitten sichergestellt werden. Auf diese Weise kann eine weitere Optimierung der Schneegriffeigenschaften optimal nach den jeweiligen Erfordernissen des Reifens und seines gedachten Einsatzes umgesetzt werden, ohne zusätzliche Beeinträchtigungen durch Vorgaben der Entlüftung. Der Gestaltungsspielraum zur Gestaltung von Fahrzeugreifen mit guten Schneegriffeigenschaften kann somit deutlich erweitert werden. Durch Ausbildung der Erhebung kann die wirksame Positionierung von Entlüftungsventilen in einfacher Weise zuverlässig fertigungstechnisch umgesetzt werden.

Besonders vorteilhaft ist die Ausbildung eines Laufstreifenprofils gemäß den Merkmalen von Anspruch 2, wobei die im Profilpositiv ausgebildeten Feineinschnitte mit ihrer Haupterstreckungsrichtung in der radial äußeren Oberfläche im Wesentlichen parallel zueinander ausgerichtet sind. Hierdurch kann in einfacher Weise eine besonders hohe Anzahl von Griffkanten optimiert umgesetzt werden.

Besonders vorteilhaft ist die Ausbildung eines Laufstreifenprofils gemäß den Merkmalen von Anspruch 3, wobei das Kreissegment der zweiten kreissegmentlinienförmigen Abschnitte jeweils mit einem Kreisradius R_{K} mit R_{K} ≥2mm ausgebildet ist. Hierdurch kann eine sichere Positionierung der bekannten, optimierten Entlüftungsventile mit tellerförmigen Ventilteller von ca. 3mm Durchmesser umgesetzt werden.

Besonders vorteilhaft ist die Ausbildung eines Laufstreifenprofils gemäß den Merkmalen von Anspruch 4, wobei der Kreisradius R_{K} mit R_{K} ≤ 3mm ausgebildet ist. Hierdurch kann bei guter Ausformbarkeit der Lamellenbleche ein kleiner Abstand zwischen benachbarten Feineinschnitten und somit eine hohe Dichte von Feineinschnitten zuverlässig umgesetzt werden.

Besonders vorteilhaft ist die Ausbildung eines Laufstreifenprofils gemäß den Merkmalen von Anspruch **5,** wobei das Kreissegment des zweiten, kreissegmentlinienförmigen Abschnitts ein Halbkreis ist. Hierdurch kann in einfacher Weise fertigungstechnisch eine eine optimierte Dichte an Feineinschnitten mit wirkungsvoller Entlüftung umgesetzt werden.

Besonders vorteilhaft ist die Ausbildung eines Laufstreifenprofils gemäß den Merkmalen von Anspruch **6,** wobei zumindest diejenigen ersten geradlinigen Abschnitte eines Feineinschnittes, welche jeweils zwei zweite kreissegmentlinienförmigen Abschnitte miteinander verbinden, parallel zueinander ausgebildet - und insbesondere auf einer gemeinsamen Geraden g - ausgebildet sind. Hierdurch kann in einfacher Weise eine besonders hohe Anzahl von Griffkanten im Laufstreifenprofil bei einer einfachen Fertigbarkeit der zur Ausformung der Feineinschnitte erforderlichen Lamellenbleche optimiert umgesetzt werden.

Besonders vorteilhaft ist die Ausbildung eines Laufstreifenprofils gemäß den Merkmalen von Anspruch 7, wobei zwischen zwei längs der Haupterstreckungsrichtung eines Feineinschnitts in der radial äußeren Oberfläche benachbarten, hintereinander ausgebildeten zweiten, kreissegmentlinienförmigen Abschnitten jeweils ein geradliniger Abschnitt der Erstreckungslänge a mit 5mm ≤ a ≤ 15mm ausgebildet ist. Hierdurch kann sowohl eine für die Entlüftung angestrebte hohe Dichte an Entlüftungsventilen bei einfacher Ausformbarkeit der geradlinigen Abschnitte in den Lamellenblechen einfach und zuverlässig umgesetzt werden.

Besonders vorteilhaft ist die Ausbildung eines Laufstreifenprofils gemäß den Merkmalen von Anspruch 8, wobei die Halbkreise der beiden durch einen ersten Abschnitt miteinander verbundenen zweiten Abschnitte jeweils zur gleichen Seite von der Geraden des Geradlinigen Abschnittes hin ausgerichtet ausgebildet sind.

Besonders vorteilhaft ist die Ausbildung eines Laufstreifenprofils gemäß den Merkmalen von Anspruch 9, wobei die Halbkreise zweier in Haupterstreckungsrichtung eines Feineinschnittes - insbesondere unmittelbar in einander übergehend ausgebildete - hintereinander angeordnete zweite Abschnitte zu entgegengesetzter Seite der angrenzenden ersten geradlinigen Abschnitte hin ausgerichtet ausgebildet sind.

Die Erfindung wird im Folgenden an Hand der in den Figuren 1 bis 4 dargestellten Ausführungsbeispiele näher erläutert. Hierin zeigen
- Fig. 1: eine Draufsicht auf einen Abschnitt eines Laufstreifenprofils mit mehreren Profilblockelementen mit erfindungsgemäß ausgebildeten Feineinschnitten,
- Fig.2: das Laufstreifenprofil von Fig.1 in Schnittdarstellung gemäß Schnitt II-II von Fig.l,
- Fig.3: eine vergrößerte Detaildarstellung des Details III von Fig.1 zur Erläuterung der Ausbildung eines erfindungsgemäßen Feineinschnitts und
- Fig.4: eine Darstellung des im Detail III von Fig.1 dargestellten Feineinschnitts in Schnittdarstellung gemäß Schnitt IV-IV von Fig.3.

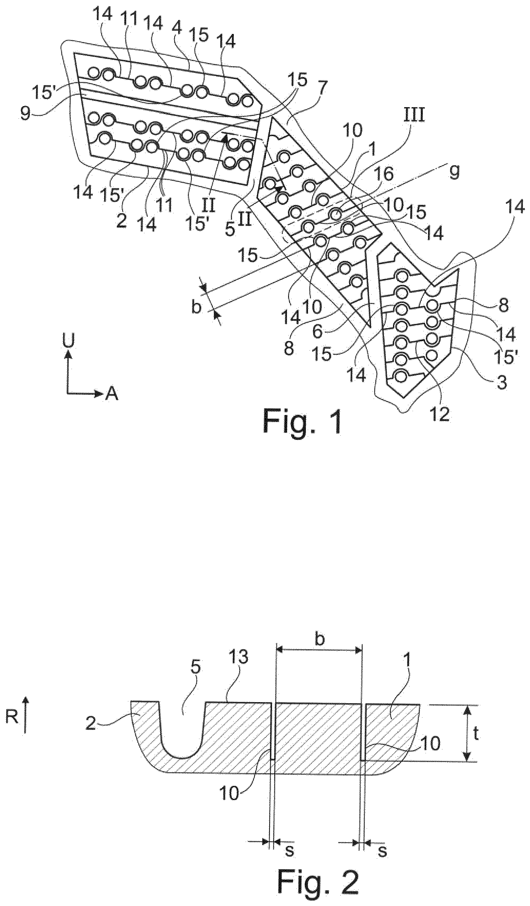

Figuren 1 bis 4 zeigen einen Ausschnitt eines Laufstreifenprofils eines Fahrzeugluftreifens für Personenkraftwagen (PKW) mit - in Fig.1 dargestellten - radial erhabenen Profilblockelementen 1, 2, 3 und 4, die jeweils in bekannter Weise durch Rillen 5, 6 bzw. 9 voneinander beabstandet sind. Die Profilblockelemente 1, 3 und 4 sind dabei in Umfangsrichtung U des Fahrzeugluftreifens in der in Figur 1 nach oben hin dargestellten Drehrichtung durch eine Querrille 7 begrenzt. Die Profilblockelemente 1, 2 und 3 sind in Umfangsrichtung U in der in Figur 1 nach unten hin dargestellten Drehrichtung jeweils durch eine Querrille 8 begrenzt. Die Profilblockelemente 2 und 4 sind in Umfangsrichtung hintereinander angeordnet und durch eine Querrille 9 voneinander beabstandet. Das Profilblockelement 1 ist in axialer Richtung A des Fahrzeugluftreifens von den Profilblockelementen 2 und 4 durch einen mit ihrer Haupterstreckungsrichtung in Umfangsrichtung U ausgerichtete Rille 5 beabstandet. Das Profilblockelement 1 und das Profilblockelement 3 sind in axialer Richtung A des Fahrzeugluftreifens durch eine mit ihrer Haupterstreckungsrichtung in Umfangsrichtung U des Fahrzeugluftreifens ausgerichtete Rille 6 voneinander beabstandet.

Die Profilblockelemente 1, 2, 3 und 4 sind in radialer Richtung R des Fahrzeugluftreifens nach außen hin durch eine radial äußere Oberfläche 13 begrenzt. In der radial äußeren Oberfläche 13 ist das Profilblockelement 1 - wie in den Figuren 1 bis 4 dargestellt ist - durch eine Vielzahl von parallel zueinander erstreckten, jeweils in einem Abstand b voneinander hintereinander angeordneten Feineinschnitten 10 ausgebildet. Die Feineinschnitte 10 erstrecken sich jeweils durch das gesamte Profilblockelement 1 hindurch münden und an beiden Erstreckungsenden jeweils in unterschiedliche, das Profilblockelement 1 begrenzende Rillen. So münden die im mittleren Erstreckungsabschnitt des Profilblockelementes lausgebildeten Feineinschnitte 10 in die das Profilblockelement zu unterschiedlichen Seiten hin begrenzenden Querrillen 7 und 8. Die in dem durch die Rille 5 und die Querrille 7 eingeschlossenen Erstreckungsabschnitt des Profilblockelementes 1 ausgebildeten Feineinschnitte 10 münden in die Querrille 7 und in die Rille 5. Die in dem durch die Querrille 8 und die Rille 6 eingeschlossenen Erstreckungsabschnitt des Profilblockelementes 1 ausgebildeten Feineinschnitte 10 münden in die Querrille 8 und in die Rille 6.

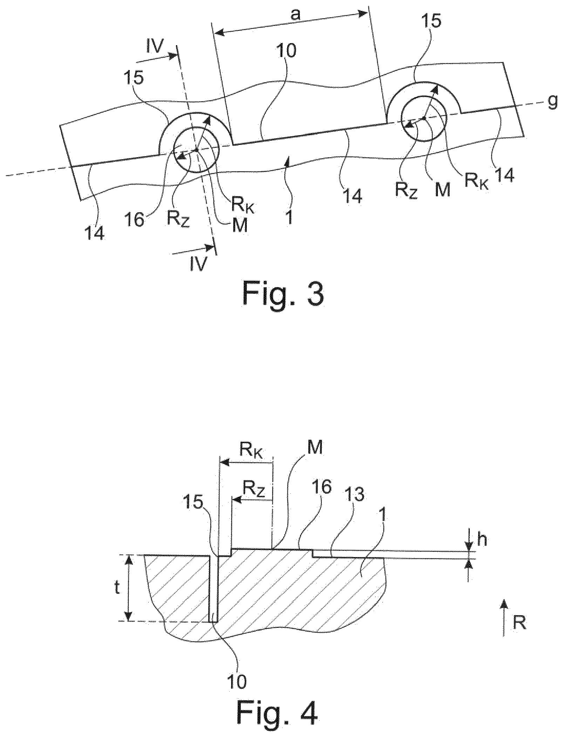

Wie in Figur 3 dargestellt ist, ist der Feineinschnitt 10 jeweils längs seiner Erstreckungsrichtung in der radial äußeren Oberfläche aus geradlinigen Erstreckungsabschnitten 14 und aus halbkreislinienförmigen Erstreckungsabschnitten 15 ausgebildet. Dabei sind die geradlinigen Erstreckungsabschnitte 14 und die halbkreislinienförmigen Erstreckungsabschnitte 15 in längs der Erstreckungsrichtung des Feineinschnittes 10 alternierender Abfolge hintereinander angeordnet. Die geradlinigen Erstreckungsabschnitte 14 eines Feineinschnittes 10 liegen dabei jeweils auf einer gemeinsamen Geraden g. Die halbkreislinienförmigen Erstreckungsabschnitte 15 bilden dabei einen Halbkreis mit dem Radius R_{K} um einen auf der in der radial äußeren Oberfläche 13 auf der Geraden g angeordneten Mittelpunkt M. Der Radius R_{K} ist dabei mit 2mm≤R_{K}≤3mm beispielsweise mit R_{K} =2,5 mm ausgebildet. Die beiden in Figur 3 hintereinander angeordneten halbkreislinienförmigen Erstreckungsabschnitte 15 sind durch einen geradlinigen Erstreckungsabschnitt 14 der Erstreckungslänge a mit 5 mm≤a≤15mm miteinander verbunden. Beispielsweise ist a=8mm gewählt. Die Feineinschnitte 10 sind mit einer in radialer Richtung R des Reifens gemessenen Tiefe t ausgebildet mit 2mm≤t. Dabei ist bei den Ausführungsbeispielen von PKW-Reifen t mit t≤8mm ausgebildet. Beispielsweise ist t=7mm gewählt.

Bei Nutzfahrzeugreifen (NFZ-Reifen) ist t mit t≤25mm ausgebildet.

Die Feineinschnitte 10 sind - wie in Fig.2 dargestellt ist - mit einer eine Einschnittsbreite s mit 0,4 mm≤s≤1mm ausgebildet. Beispielsweise ist s=0,6mm gewählt.

Wie in Figur 1 zu erkennen ist, sind die Feineinschnitte 10 des Profilblockelementes 1 jeweils so hintereinander angeordnet, dass die Mittelpunkte M in der jeweils zur Umfangsrille 8 hin nächstliegend angeordneten halbkreislinienförmigen Erstreckungsabschnitte 15 der Feineinschnitte 10 auf einer gemeinsamen Gerade angeordnet sind und dass die Mittelpunkte M der halbkreislinienförmigen Abschnitte 15 der Feineinschnitte 10, welche der Umfangsrille 7 jeweils am nächsten angeordnet sind, ebenfalls auf einer gemeinsamen Gerade angeordnet sind.

Für die Ausformung des Reifens in einer Reifenvulkanisationsform sind die Entlüftungsventile in der Reifenvulkanisationsform jeweils so positioniert, dass sie bei geschlossener Reifenvulkanisationsform mit ihrem kreisförmigen Ventilteller konzentrisch zum Kreis der halbkreislinienförmigen Erstreckungsabschnitte 15 der Feineinschnitte 10 in Berührkontakt zur Reifenoberfläche stehen. Sie bilden dann bei der Vulkanisation Ventiltellerabdrücke 16 auf der Reifenoberfläche, welche beispielsweise - wie in den Figuren 3 und 4 dargestellt - konzentrisch zum Kreis der halbkreislinienförmigen Erhebungen 15 ausgebildete, kreisförmige oder kreissegmentförmige Erhebungen mit einem Radius R_{Z} um den Mittelpunkt M der halbkreisförmigen linienförmigen Erstreckungsabschnitte 15 und mit einer maximalen in radialer Richtung R des Reifens gemessenen Erstreckungshöhe h bilden. Der Radius R_{Z} ist dabei bei den üblichen Ventiltellerdurchmessern von 3 mm mit ca. R_{Z}=1,5mm ausgebildet. Der Radius R_{K} der halbkreislinienförmigen Erstreckungsabschnitte 15 ist dabei so dimensioniert, dass R_{K}≥(R_{Z}+0,5 mm) ist.

Die Höhe h derartiger Ventiltellerabdrücke kann dabei typischerweise bis zu 2mm groß ausgebildet sein.

In den Figuren 3 und 4 ist der Ventiltellerabdruck 16 als kreisförmige Erhebung dargestellt. Die Ventiltellerabdrücke 16 sind in anderer - nicht dargestellter - Ausführung zum Teil nur teilkreisförmige Erhebungen oder auch ringförmige oder teilringförmige Erhebungen mit dem Außendurchmesser R_{Z} um den Mittepunkt M.

Wie in Fig.1 im Profilblockelement 1 deutlich zu erkennen ist, sind auf diese Weise jeweils zwischen zwei senkrecht zur Haupterstreckungsrichtung der Feineinschnitte 10 des Profilblockelementes 1 hintereinander angeordneten Feineinschnitten 10 innerhalb des Profilblockelementes 1 in hoher Dichte Ventiltellerabdrücke 16 von Entlüftungsventilen ausgebildet und zwar innerhalb der Haupterstreckung des jeweiligen Feineinschnittes 10. Somit sind in der Vulkanisationsform in hoher Dichte zwischen den zur Ausbildung der Feineinschnitte 10 ausgebildeten Lamellenblechen Entlüftungsventile angeordnet.

Die Abstände b zwischen den hintereinander angeordneten Feineinschnitten sind mit b≥ (2 R_{K}) ausgebildet. In einem Ausführungsbeispiel, in welchem R_{K} mit R_{K} =2mm ausgebildet ist, ist b somit mit b ≥ 4mm - beispielsweise mit b=5mm - ausgebildet.

In den Figuren 1 und 3 ist am Beispiel des Profilblockelementes 1 ein Ausführungsbeispiel dargestellt, bei dem die halbkreisförmigen Erstreckungsabschnitte 15 eines Feineinschnittes 10 jeweils zur gleichen Seite der Geraden g des Feineinschnittes 10 hin ausgebildet sind.

Im Profilblockelement 3 ist ein Ausführungsbeispiel anhand der Feineinschnitte 12 dargestellt, bei welchem die durch den geradlinigen Erstreckungsabschnitt 14 miteinander verbundenen halbkreislinienförmigen Erstreckungsabschnitte 15 jeweils bezüglich ihrer Geraden g zu unterschiedlicher Seite hin ausgerichtet sind. Zur Unterscheidung ist dabei der eine halbkreislinienförmige Erstreckungsabschnitt mit dem Bezugszeichen 15 und der in die Gegenrichtung ausgerichteter halbkreislinienförmige Erstreckungsabschnitt mit dem Bezugszeichen 15' dargestellt.

In Fig.1 ist ein weiteres Ausführungsbeispiel anhand des Profilblockelementes 2 dargestellt, bei welchem jeweils ein halbkreislinienförmiger Erstreckungsabschnitt 15 und ein entsprechend zur Gegenseite hin ausgerichteter halbkreislinienförmiger Erstreckungsabschnitt 15' eines Feineinschnittes 11 unmittelbar benachbart tangential ineinander übergehen. Dieses Paar aus in Erstreckungsrichtung des Feineinschnitts 11 hintereinander angeordneten halbkreislinienförmigen Erstreckungsabschnitten 15 und 15' ist mit dem längs der Erstreckung des Feineinschnitts 11 nächstliegenden benachbarten Paar aus halbkreislinienförmigen Erstreckungsabschnitten 15 und 15' wiederum durch einen geradlinigen Erstreckungsabschnitt 14 der Erstreckungslänge a - wie zum Beispiel des Profilblockelements 1 beschrieben - verbunden.

In Fig.1 ist am Beispiel des Profilblockelementes 1 zu erkennen, dass das Profilblockelement 1 mit einer Vielzahl von hintereinander angeordneten Feineinschnitten 10 der erfindungsgemäßen Art ausgebildet ist.

Das Profilblockelement 2 zeigt eine Ausbildung eines Profilblockelementes mit lediglich zwei in Umfangsrichtung hintereinander angeordneten erfindungsgemäßen Feineinschnitten 11.

Das Profilblockelement 4 zeigt ein weiteres Ausführungsbeispiel eines in Umfangsrichtung U mit kurzer Erstreckung ausgebildeten Profilblockelements, bei dem lediglich ein einziger Feineinschnitt 11 mit alternierender Abfolge aus geradlinigen Erstreckungsabschnitten 14 und kreislinienförmigen Erstreckungsabschnitten 15 bzw. 15' ausgebildet ist.

Die Feineinschnitte 10 bzw.11 sind längs ihrer Erstreckung in radialer Richtung R des Reifens ausgehend von der radial äußeren Oberfläche 13 nach innen hin in einer Ausführung - wie beispielsweise in Fig.2 und Fig.4 dargestellt ist - geradlinig erstreckt ausgebildet.

In anderer - nicht dargestellter - Ausführung sind die Feineinschnitte 10 bzw.11 längs ihrer radialen Erstreckung ausgehend von der radial äußeren Oberfläche nach innen hin unter Einschluss eines Neigungswinkels zur radialen Richtung R geneigt geradlinig erstreckt ausgebildet.

In anderer nicht dargestellter Ausführung sind die Feineinschnitte 10 bzw. 11 längs ihrer Erstreckung in radialer Richtung R in bekannter Weise krummlinig - beispielsweise zickzack- oder wellenförmig - verlaufend ausgebildet.

### Bezugszeichenliste

### (Teil der Beschreibung)

- 1: Profilblockelement
- 2: Profilblockelement
- 3: Profilblockelement
- 4: Profilblockelement
- 5: Rille
- 6: Rille
- 7: Rille
- 8: Rille
- 9: Rille
- 10: Feineinschnitt
- 11: Feineinschnitt
- 12: Feineinschnitt
- 13: Radial äußere Oberfläche
- 14: Erstreckungsabschnitt
- 15: Erstreckungsabschnitt
- 16: Ventilabdruck

## Patentansprüche

1. Laufstreifenprofil eines Fahrzeugreifens mit radial erhabenen und durch Rillen (5,6,7,8) begrenzten Profilpositiven (1) - wie Profilblockelementen oder Profilrippen -, welche in radialer Richtung R des Reifens durch eine radial äußere Oberfläche (13) begrenzt sind, und mit in Profilpositiven (1) voneinander beabstandet ausgebildeten Feineinschnitten (10),
wobei im Profilpositiv (1) Feineinschnitte (10) ausgebildet sind, die längs ihrer Haupterstreckungsrichtung in der radial äußeren Oberfläche (13) aus hintereinander angeordneten - insbesondere in Haupterstreckungsrichtung ausgerichteten - ersten geradlinigen (14) und zweiten kreissegmentlinienförmigen (15) Abschnitten ausgebildet sind, und wobei zumindest diejenigen ersten geradlinigen Abschnitte (14) eines Feineinschnittes (10), welche jeweils zwei zweite kreissegmentlinienförmige Abschnitte (15) miteinander verbinden, parallel zueinander ausgebildet sind **dadurch gekennzeichnet,**
**dass** der zweite kreissegmentlinienförmige Abschnitt (15) zumindest jeweils mit einem Kreisradius R_{K} ausgebildet ist, wobei innerhalb des Kreises zumindest einiger kreissegmentlinienförmiger Abschnitte (15) jeweils eine Erhebung (16) des Gummimaterials ausgebildet ist und wobei diese Erhebung (16) kreisförmig, ringförmig, kreissegmentförmig oder ringsegmentförmig mit einem Außenradius Rz der Kreisform oder Ringform ausgebildet ist mit R_{K} ≥ (Rz +0,5mm).

2. Laufstreifenprofil gemäß den Merkmalen von Anspruch 1,
wobei die im Profilpositiv (1) ausgebildeten Feineinschnitte (10) mit ihrer Haupterstreckungsrichtung in der radial äußeren Oberfläche (13) im Wesentlichen parallel zueinander ausgerichtet sind.

3. Laufstreifenprofil gemäß den Merkmalen von Anspruch 1 oder 2,
wobei das Kreissegment der zweiten kreissegmentlinienförmigen Abschnitte (15) jeweils mit einem Kreisradius R_{K} mit R_{K} ≥2mm ausgebildet ist.

4. Laufstreifenprofil gemäß den Merkmalen von Anspruch 3,
wobei der Kreisradius R_{K} mit R_{K} ≤ 3mm ausgebildet ist.

5. Laufstreifenprofil gemäß den Merkmalen von einem oder mehreren der vorangegangenen Ansprüche,
wobei das Kreissegment des zweiten kreissegmentlinienförmigen Abschnitts (15) ein Halbkreis ist.

6. Laufstreifenprofil gemäß den Merkmalen von einem oder mehreren der vorangegangenen Ansprüche,
wobei zumindest diejenigen ersten geradlinigen Abschnitte (14) eines Feineinschnittes(10), welche jeweils zwei zweite kreissegmentlinienförmigen Abschnitte (15) miteinander verbinden, parallel zueinander und auf einer gemeinsamen Geraden g ausgebildet sind.

7. Laufstreifenprofil gemäß den Merkmalen von einem oder mehreren der vorangegangenen Ansprüche,
wobei zwischen zwei längs der Haupterstreckungsrichtung eines Feineinschnitts (10) in der radial äußeren Oberfläche (13) benachbarten, hintereinander ausgebildeten zweiten kreissegmentlinienförmigen Abschnitten (15) jeweils ein geradliniger Abschnitt (14) der Erstreckungslänge a mit 5mm ≤ a ≤ 15mm ausgebildet ist.

8. Laufstreifenprofil gemäß den Merkmalen der Ansprüche 7 und 5,
wobei die Halbkreise der beiden durch einen ersten Abschnitt (14) miteinander verbundenen zweiten Abschnitte (15) jeweils zur gleichen Seite von der Geraden g des Geradlinigen Abschnittes (14) hin ausgerichtet ausgebildet sind.

9. Laufstreifenprofil gemäß den Merkmalen von Anspruch 5,
wobei die Halbkreise zweier in Haupterstreckungsrichtung eines Feineinschnittes (11,12) - insbesondere unmittelbar in einander übergehend ausgebildete - hintereinander angeordnete zweite Abschnitte (15,15') zu entgegengesetzter Seite der angrenzenden ersten geradlinigen Abschnitte (14) hin ausgerichtet ausgebildet sind.

## Claims

1. Tread profile of a vehicle tyre, having radially raised profile positives (1) - such as profile block elements or profile ribs - that are bounded by grooves (5, 6, 7, 8) and are bounded in a radial direction R of the tyre by a radially outer surface (13), and having fine sipes (10) formed in a manner spaced apart from one another in profile positives (1),
wherein fine sipes (10) are formed in the profile positive (1) that are formed, in their main extension direction in the radially outer surface (13), from successively arranged - oriented in particular in the main extension direction - first rectilinear portions (14) and second portions (15) that are in the form of a circle segment line, and
wherein at least those first rectilinear portions (14) of a fine sipe (10) that each connect two second portions (15) in the form of a circle segment line together are formed parallel to one another, **characterized**
**in that** the second portion (15) in the form of a circle segment line is formed at least in each case with a circle radius R_{K}, wherein, within the circle of at least some portions (15) in the form of a circle segment line, in each case an elevation (16) of the rubber material is formed, and wherein this elevation (16) is formed in a circular, annular circle-segment-shaped or ring-segment-shaped manner with an outside radius Rz of the circle shape or ring shape, where R_{K} ≥ (R_{Z} + 0.5 mm).

2. Tread profile according to the features of Claim 1,
wherein the fine sipes (10) formed in the profile positive (1) are oriented substantially parallel to one another with their main extension direction in the radially outer surface (13).

3. Tread profile according to the features of Claim 1 or 2,
wherein the circle segment of the second portions (15) in the form of a circle segment line is formed in each case with a circle radius R_{K}, where R_{K} ≥ 2 mm.

4. Tread profile according to the features of Claim 3,
wherein the circle radius R_{K} is formed such that R_{K} ≤ 3 mm.

5. Tread profile according to the features of one or more of the preceding claims,
wherein the circle segment of the second portion (15) in the form of a circle segment line is a semicircle.

6. Tread profile according to the features of one or more of the preceding claims,
wherein at least those first rectilinear portions (14) of a fine sipe (10) that each connect in each case two second portions (15) in the form of a circle segment line together are formed parallel to one another and on a common straight line g.

7. Tread profile according to the features of one or more of the preceding claims,
wherein in each case one rectilinear portion (14) of the extension length a, wherein 5 mm ≤ a ≤ 15 mm, is formed between two successively formed second portions (15) in the form of a circle segment line that are adjacent in the radially outer surface (13) in the main extension direction of a fine sipe (10).

8. Tread profile according to the features of claims 7 and 5,
wherein the semicircles of the two second portions (15) connected together by a first portion (14) are each formed in a manner directed towards the same side of the straight line g of the rectilinear portion (14).

9. Tread profile according to the features of claim 5,
wherein the semicircles of two second portions (15, 15') that are successively arranged in the main extension direction of a fine sipe (11, 12) - in particular formed in a manner transitioning directly into one another - are formed in a manner directed towards the opposite side of the adjoining first rectilinear portions (14).

## Revendications

1. Profil de bande de roulement d'un pneu de véhicule doté d'éléments positifs de sculpture (1), radialement convexes et délimités par des sillons (5, 6, 7, 8) - tels que des éléments de bloc de sculpture ou des nervures, lesquels sont délimités dans la direction radiale R du pneu par une surface extérieure radiale (13), et doté d'incisions fines (10) réalisées dans les éléments positifs de sculpture (1) et écartées l'une de l'autre, dans lequel des incisions fines (10) sont réalisées dans l'élément positif de sculpture (1), lesquelles sont réalisées à partir de premières sections rectilignes (14) et de deuxièmes sections en forme d'arc de cercle (15) agencées l'une derrière l'autre le long de leur direction d'étendue principale dans la surface extérieure radiale (13) - en particulier orientées dans la direction d'étendue principale - et dans lequel au moins chacune des premières sections rectilignes (14) d'une incision fine (10), lesquelles relient respectivement l'une à l'autre deux deuxièmes sections en forme d'arc de cercle (15), sont réalisées parallèlement l'une à l'autre, **caractérisé en ce que** la deuxième section en forme d'arc de cercle (15) est réalisée respectivement avec au moins un rayon R_{K}, dans lequel une élévation (16) du matériau de caoutchouc est respectivement réalisée à l'intérieur du cercle d'au moins plusieurs sections en forme d'arc de cercle (15) et dans lequel cette élévation (16) est réalisée de forme circulaire, annulaire, en forme d'arc de cercle ou de segment d'anneau, avec un rayon externe de la forme circulaire ou annulaire Rz tel que R_{K} ≥ (R_{Z} + 0,5 mm).

2. Profil de bande de roulement selon les caractéristiques de la revendication 1, dans lequel les incisions fines (10) réalisées dans l'élément positif de sculpture (1) sont orientées, avec leur direction d'étendue principale, de manière essentiellement parallèle l'une à l'autre dans la surface extérieure radiale (13).

3. Profil de bande de roulement selon les caractéristiques de la revendication 1 ou 2, dans lequel l'arc de cercle des deuxièmes sections en forme d'arc de cercle (15) est réalisé respectivement avec un rayon R_{K} tel que R_{K} ≥ 2 mm.

4. Profil de bande de roulement selon les caractéristiques de la revendication 3, dans lequel le rayon R_{K} est réalisé tel que R_{K} ≤ 3 mm.

5. Profil de bande de roulement selon les caractéristiques d'une ou plusieurs des revendications précédentes, dans lequel l'arc de cercle des deuxièmes sections en forme d'arc de cercle (15) est un demi-cercle.

6. Profil de bande de roulement selon les caractéristiques d'une ou plusieurs des revendications précédentes, dans lequel au moins chacune des premières sections rectilignes (14) d'une incision fine (10), lesquelles relient respectivement l'une à l'autre deux deuxièmes sections en forme d'arc de cercle (15), sont réalisées parallèlement l'une à l'autre et sur une droite g commune.

7. Profil de bande de roulement selon les caractéristiques d'une ou plusieurs des revendications précédentes, dans lequel une section rectiligne (14) de longueur d'étendue a telle que 5 mm ≤ a ≤ 15 mm est respectivement réalisée entre deux deuxièmes sections en forme d'arc de cercle (15) réalisées l'une derrière l'autre et adjacentes dans la surface extérieure radiale (13) le long de la direction d'étendue principale d'une incision fine (10).

8. Profil de bande de roulement selon les caractéristiques des revendications 7 et 5, dans lequel les demi-cercles des deux deuxièmes sections (15) reliées l'une à l'autre par une première section (14) sont réalisés respectivement comme orientés vers le même côté de la droite g de la section rectiligne (14).

9. Profil de bande de roulement selon les caractéristiques de la revendication 5, dans lequel les demi-cercles de deux deuxièmes sections (15, 15') agencées l'une derrière l'autre dans la direction d'étendue principale d'une incision fine (11, 12) - en particulier réalisées comme passant directement de l'une à l'autre - sont réalisés comme orientés vers des côtés opposés des premières sections rectilignes (14) qui les jouxtent.
